# EUROPÄISCHE PATENTSCHRIFT

(11) **EP 3 290 227 B1**
(45) Veröffentlichungstag und Bekanntmachung des Hinweises auf die Patenterteilung: **13.05.2020**
(21) Anmeldenummer: 17187295.5
(22) Anmeldetag: 22.08.2017
(51) Int. Cl.: B60B 5/02, B60B 21/02, B60B 21/06, B29C 70/44, B60B 1/00

(54) **FAHRRADFELGE MIT DECKLAGEERGÄNZENDEN STEHFÄDEN EINER VERSTÄRKUNGSLAGE UND FAHRRAD MIT FAHRRADFELGE-EINSETZENDEN LAUFRÄDERN**
BICYCLE RIM WITH FILLER YARNS FOR SUPPLEMENTING SURFACE LAYERS OF A REINFORCING LAYER AND BICYCLE WITH WHEELS USING THE RIM
JANTE DE BICYCLETTE POURVUE D'UNE DOUBLURE COMPLÉMENTAIRE À FIL DROIT D'UNE COUCHE DE RENFORCEMENT ET BICYCLETTE POURVUE DES ROUES PORTANTES UTILISANT LES JANTES DE BICYCLETTE

(30) Priorität: 31.08.2016 DE 102016116260
(43) Veröffentlichungstag der Anmeldung: 07.03.2018
(73) Patentinhaber: Krömker, Reinhold, 32584 Löhne (DE)
(72) Erfinder:
(74) Vertreter: Winter, Brandl, Fürniss, Hübner, Röss, Kaiser, Polte - Partnerschaft mbB

(56) Entgegenhaltungen:
- EP-A1- 1 506 882
- EP-A1- 2 030 805
- EP-A2- 2 567 830
- DE-A1-102011 012 675
- DE-A1-102014 106 860

## Beschreibung

Die Erfindung betrifft eine Fahrradfelge für ein Laufrad eines Fahrrades nach dem Oberbegriff des Anspruchs 1, mit einem ringförmigen Körper, wobei der Körper aus einem Fasern / Festigkeitserhöhungsfasern enthaltendem Faserverbundmaterial (vorzugsweise vollständig) aufgebaut ist, wobei der Körper aus unterschiedlichen Lagen an Fasern aufgebaut ist, wobei eine Lage an Fasern als eine über die gesamte Oberfläche des Körpers geschlossene Decklage ausgebildet ist, und wobei an wenigstens einer ausgewählten, begrenzten, d.h. lokalen Stelle der Decklage, aber über den gesamten Umfang des ringförmigen Körpers umlaufend und im Inneren des Körpers, von der Decklage bedeckt, eine in Umfangsrichtung ausgerichtete Fasern, d. h. 0°-Fasern und/oder Stehfäden besitzende Verstärkungslage angeordnet ist.

Aus dem Stand der Technik sind bereits Fahrradfelgen zur Genüge bekannt. Üblicherweise werden diese aus Stahl, und wenn sie gewichtsmäßig leichter sein sollen, aus Aluminium gefertigt. Seit geraumer Zeit wird insbesondere für gewichtssensitive Anwendungen auch auf Kunststoffverbundfelgen zurückgegriffen. Hier werden meistens Faserverbundgelege verwendet. Es haben sich dabei im Markt Kohlefaserfelgen durchgesetzt, also solche Felgen, die Kohlefasern in Harz eingebettet und ausgehärtet einsetzen. Solche Faserverbundfelgen sind nicht nur besonders leicht, sondern auch besonders steif. Ferner können die Fasern gezielt so ausgerichtet und eingesetzt sein, dass ein gutes Komfortverhalten bei geringem Gewicht und hoher Steifigkeit resultiert. Gattungsgemäßer Stand der Technik ist bspw. aus der EP 1 506 882 A1, EP 2 030 805 A1, EP 2 567 830 A2, DE 10 2014 106 860 A1, DE 10 2011 012 675 A1 bekannt.

Die bisherigen Fahrradfelgen sind jedoch sehr umständlich zu fertigen und dadurch kostenintensiv und häufig nicht robust und steif genug. Hier gilt es, Abhilfe zu schaffen.

Es ist die Aufgabe der vorliegenden Erfindung, die Nachteile aus dem Stand der Technik zu beseitigen oder wenigstens zu mildern und insbesondere kostengünstig herstellbarere und besonders robuste Fahrradfelgen für den qualitativ hochwertigen Massenmarktbereich zur Verfügung zu stellen.

Diese Aufgabe wird bei einer gattungsgemäßen Fahrradfelge erfindungsgemäß durch die Merkmale des Anspruchs 1 gelöst.

Mit anderen Worten wird ein Nippelbett mit wenigstens einer Flechtlage zur Verfügung gestellt, welche zusätzlich Stehfäden lokal, aber in Umfangsrichtung umlaufend, aufweist, wobei die Flechtlage durchgängige Fasern enthält, und eine innerste Lage vorhanden ist sowie Zwischenlagen vorhanden sind.

Vorteilhafte Ausführungsformen sind in den Unteransprüchen beansprucht und werden nachfolgend näher erläutert.

So ist es von Vorteil, wenn eine Decklage, zwei Decklagen, drei oder gar vier Decklagen mit geflechtartig ausgerichteten Decklagenfäden / Decklagenfasern eingesetzt sind. Die Verstärkungslage kann an den Felgenhörnern und radial Innen, insbesondere also im Nippelbettbereich eingesetzt sein. Ist ein Kern verwendet, so liegen die Verstärkungslagen direkt auf dem Kern auf. Natürlich ist der Kern entnehmbar. Der Kern kann aus einem Schaummaterial bestehen oder als wiederverwendbarer Kern, beispielsweise als luftgefüllter Schlauch konfektioniert sein. Auch ausschmelzbare bzw. auslösbare Kerne, wie niedrigschmelzende Metalllegierungen oder Sandkerne, sind natürlich denkbar.

Insbesondere ist es von Vorteil, wenn die ausgewählte Stelle ein radialinnerer Bereich des Körpers ist, der zum Ausbilden eines Nippelbetts vorgesehen ist, etwa durch ein Beinhalten von das Innere des Körpers mit der Umgebung verbindenden Löchern, die zur Aufnahme von Nippeln vorgesehen sind, mit Hilfe derer Speichen zu befestigen sind. Gerade auf dieser radial innen liegenden Seite bedarf eine Fahrradfelge, die einen erfindungsgemäßen ringförmigen Körper nach Art eines Felgenringes einsetzt, einer besonderen Versteifung. Die durch die Speichen über die Nippel eingeleiteten Kräfte müssen dort besonders verlässlich aufgefangen werden.

Um auch besonders robuste Fahrradfelgen zur Verfügung stellen zu können, insbesondere bei zu erwartenden Kontakten mit externen Hindernissen, wie Bordsteinkanten, hat es sich bewährt, wenn die ausgewählte Stelle ein radial außen liegender Felgenhornbereich ist oder als zwei radial außen liegende und axial voneinander beabstandete Felgenhornbereiche ausgebildet ist, wobei der Felgenhornbereich und die Felgenhornbereiche zum Befestigen eines Mantels oder eines Schlauchreifens vorbereitet / ausgelegt ist/sind.

Wenn die Decklage aus in Harz eingebetteten Decklagenfäden / Decklagenfasern aufgebaut ist, die sich kreuzen, etwa um ein Biaxialgelege / -Gewebe oder besser ein Biaxialgeflecht zu bilden, kann der Felgenring über ein Los von Fahrradfelgen gesehen besonders schnell mit gleichbleibender Qualität erzeugt werden.

Für eine kosteneffiziente Herstellung hat es sich bewährt, wenn die Decklagenfäden miteinander verflochten sind oder nach Art einer Wickellage aneinander anliegen.

Ein gutes Steifigkeits- und Gewichtsverhältnis stellt sich ein, wenn die Verstärkungsfäden von einem oder mehreren Einzelsträngen, beispielsweise zwei Einzelsträngen, vorzugsweise in Bandform, mit (jeweils) einer Vielzahl an Filamenten (etwa 50.000 Einzelfilamenten) gestellt sind. Im Nachfolgenden wird auch vereinfachend bei Filamenten von Fasern gesprochen.

Wenn die Fasern der Decklage und die Verstärkungslage vorzugsweise gleichartig oder unterschiedlich sind, und der Gruppe von Kohlefasern, Aramidfasern, Glasfasern, Keramikfasern, Borfasern, Naturfasern und/oder Basaltfasern entstammen, so kann auf bewährte und in ausreichender Menge erhaltbare Rohmaterialien zurückgegriffen werden, wodurch qualitativ hochwertige oder kostengünstig erzeugbare Ergebnisse ermöglicht werden.

Es ist auch von Vorteil, wenn weitere Verstärkungsfäden so angeordnet sind, dass sie in radialer Richtung des Körpers gesehen die Fasern der Decklage (Decklagenfäden / Decklagenfasern) triaxial ergänzen, beispielsweise zu einem Triaxialgeflecht ergänzen (d. h., von den Decklagenfäden umflochten/bedeckt sind) oder auf den Decklagenfäden nur aufliegen/anliegen, also unumflochten/ondulationsfrei abgelegt sind.

Es hat sich bewährt, wenn an einer ersten ausgewählten Stelle, die auf der radial inneren Seite des Körpers positioniert ist, um ein Nippelbett auszubilden, die Verstärkungsfäden nur auf der körperinneren Seite der Decklage, also innerhalb der Decklage, diese nur bedeckend abgelegt sind, und an einer zweiten und dritten ausgewählten Stelle, nämlich je einem Felgenhornbereich, sowohl wie im Nippelbett (ondulationsfrei/nur die Decklage bedeckend) abgelegt sind als auch in die Decklage eingearbeitet sind. Ein unerwartet komfortables Produkt lässt sich dann herstellen. Dieses ist aber auch extrem steif und leicht.

Als überraschend positiv hat sich auch herausgestellt, wenn im Felgenhornbereich auf einem außenliegenden, randnahen/umgebungsnächsten ersten Verstärkungslagenteilbereich je eine erste Menge an Verstärkungsfäden so in die Decklage eingearbeitet sind, dass auf jener dem Körperinneren zugewandten und nach radial innen ausgerichteten Seite Kavitäten/Rücksprünge/Buchten/Ausprägungen gebildet sind, die von einer zweiten Menge an Verstärkungsfasern, die nur auf den Decklagenfäden aufliegen, in einem zweiten Verstärkungslagenteilbereich gefüllt sind.

Bewährt hat es sich auch, wenn im Nippelbettbereich 70 bzw. 75 Prozent bis 80 bzw. 85 Prozent, vorzugsweise 78 oder 79 Prozent, oder 59 bzw. 64 Prozent bis 68 bzw. 73 Prozent, vorzugsweise 66 Prozent, an den Decklagenfäden, vorzugsweise sich kreuzenden Decklagenfäden, vorhanden sind und der Rest durch Verstärkungsfäden gestellt wird. Diese Werte sind bei Berücksichtung der richtungsbezogenen Faserzahl, d. h., nicht Gewichtsprozent, sondern bei Heranziehen der Mengen/Volumen an Fasern, die bei Unberücksichtigtlassen der sonst üblichen Winkelbereinigung (ergo 1/cos a) vorliegen. Anders gesagt, wird beispielsweise mit 32 Fäden a 400 tex in plus sowie minus Richtung und mit 2 Fäden mit 3200 tex in Verstärkungsrichtung gerechnet, so ergibt sich ein Anteil von Decklagenfäden von 80 Prozent.

Dabei hat es sich auch bewährt, wenn in der gesamten Felge das Verhältnis von Decklagenfäden zur Verstärkungsfäden ca. 1,41 +- 10 %, ca. 0,787 +- 10 % oder ca. 0,906 +- 10 % beträgt.

Die Erfindung betrifft letztlich auch ein Fahrrad, wie ein Mountainbike, ein Rennrad oder ein Triathlonrad, mit einem oder zwei Laufrädern, in denen (jeweils) eine Fahrradfelge der erfindungsgemäßen Art eingesetzt ist.

Die Erfindung wird nachfolgend mit Hilfe einer Zeichnung näher erläutert. Dabei wird ein erstes Ausführungsbeispiel beschrieben. Es zeigen:
- Fig. 1: einen Querschnitt durch eine obere Hälfte einer erfindungsgemäßen Fahrradfelge beinhaltend einen ringförmigen Körper/einen Felgenring ohne daran angebrachtem Schlauch und Mantel oder Schlauchreifen und ohne Nippel mit daran angebrachten Speichen,
- Fig. 2: eine Vergrößerung des Details II aus Fig. 1 im Bereich eines ersten Felgenhorns, wobei das zweite Felgenhorn zu diesem identisch ausgebildet ist,
- Fig. 3: eine Vergrößerung des Bereiches III aus dem Felgenhorn aus Fig. 2,
- Fig. 4: eine Vergrößerung des Bereichs IV aus dem Felgenhorn gem. Fig. 2,
- Fig. 5: eine Vergrößerung des Bereiches V des Felgenhorns der Fig. 2 durch einen Teil der dort vorhandenen Verstärkungslage, wobei dort sowohl die im Teilbereich III verwendeten eingeflochtenen Verstärkungsfasern und die im Teilbereich IV verwendeten nicht-eingeflochtenen/ondulationsfreien Verstärkungsfäden eingesetzt sind,
- Fig. 6: der grundsätzliche Aufbau eines Geflechts mit Minus- und Plus-Fäden sowie 0°-Fäden/-Fasern bzw. Stehfäden, und
- Fig. 7: eine schematische Darstellung des Herstellens einer erfindungsgemäßen Fahrradfelge.

Die Figuren sind lediglich schematischer Natur und dienen nur dem Verständnis der Erfindung. Die gleichen Elemente sind in denselben Bezugszeichen versehen. Durch leichte Abwandlungen sind unterschiedliche Ausführungsbeispiele realisierbar, beispielsweise durch Einsetzen nur von ondulationsfreien, uneingeflochtenen Stehfäden, nur von eingeflochtenen Verstärkungsfäden oder eine Kombination daraus.

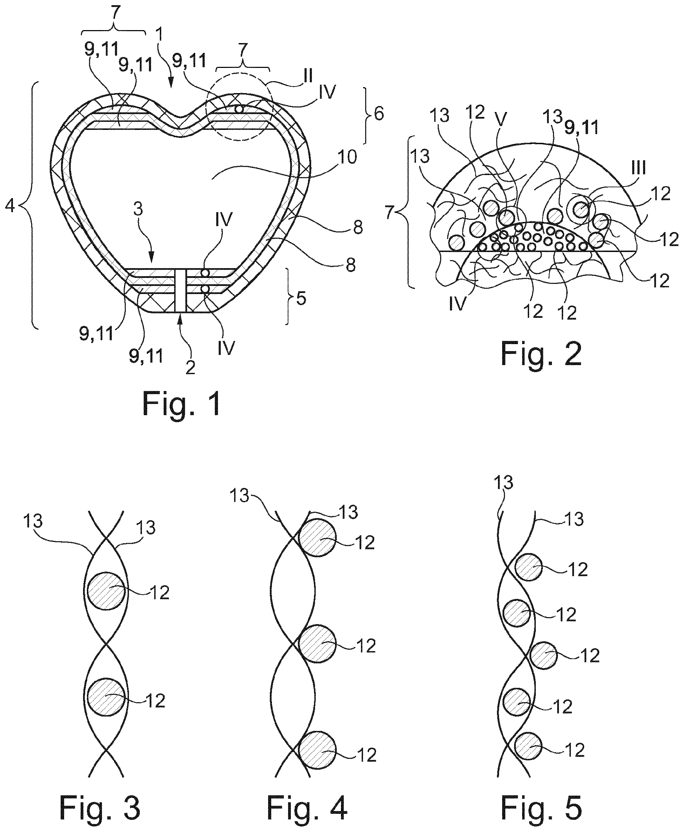

In Fig. 1 ist ein Querschnitt durch eine Hälfte einer erfindungsgemäßen Fahrradfelge 1 dargestellt. Diese Fahrradfelge 1 ist zur Verwendung in einem Laufrad eines Fahrrades vorgesehen, wobei dann noch im Bereich eines Loches 2 im Bereich eines Nippelbettes 3 (nicht dargestellte) Nippel einzusetzen sind, in denen (nicht dargestellte) Speichen zu befestigen sind. Grundsätzlich wird die Fahrradfelge 1 nach Art eines Felgenrings durch einen ringförmigen Körper 4 gebildet.

Das Nippelbett 3 ist auf einer radialen Innenseite 5 des Körpers 4 vorhanden, wohingegen auf einer radialen Außenseite 6 zwei Felgenhörner 7 ausgebildet sind. Der Körper 4 setzt sich aus unterschiedlichen Schichten zusammen, die kontinuierlich aufgebracht sein können/sind.

So ist eine (einzige / durchgängige) Decklage 8 vorhanden. Die Decklage 8 ist zweischichtig ausgebildet. Die Decklage 8 kann auch 3-schichtig oder mehrschichtig aufgebaut sein, beispielsweise bei dreifachem oder mehrfachem Umlauf des Kerns. Zwischen den Schichten der Decklage 8 ist eine Zwischenlage 9 vorhanden. Jede Zwischenlage 9 ist an drei Stellen vorhanden. Sie ist nämlich im Bereich des Nippelbetts 3 und im Bereich beider Felgenhörner 7 vorhanden.

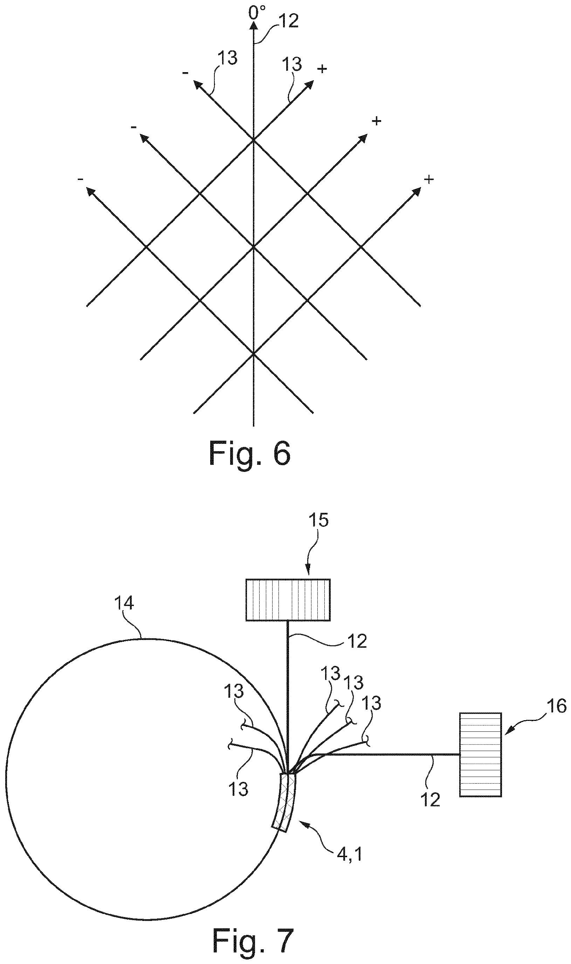

Im Inneren 10 des Körpers 4 kann ein Kern vorhanden sein, der in der hier dargestellten Ausführungsform noch fehlt bzw. bereits entnommen ist. Der Kern ist in Figur 7 mit dem Bezugszeichen 14 versehen.

Zurückkommend auf Figur 1: Zwischen der innersten Schicht der Decklage 8 und dem Kern ist jedenfalls eine Verstärkungslage 11 vorhanden. Auch die innerste Verstärkungslage 11 kann als Zwischenlage bezeichnet werden, nämlich zwischen der Decklage 8 und dem Kern bzw. dem Inneren 10 des Körpers.

Das Loch 2 ist ein Durchgangsloch, das vom Äußeren der äußersten Schicht der Decklage 8 bis ins Innere 10 des Körpers 4 ragt. Es ist zur Aufnahme des Nippels vorgesehen, wobei der Nippel zur Aufnahme der Speiche vorgesehen ist.

In der Verstärkungslage 11 sind in Umfangsrichtung ausgerichtete durchgehende Fasern, nämlich Verstärkungsfasern / Verstärkungsfäden 12 vorhanden. Die Verstärkungsfasern 12, siehe Fig. 2, sind als Null-Grad-Fasern- bzw. Stehfäden ausgebildet, und erstrecken sich über wenigstens 360 Grad des Körpers 4 um dessen Rotationsachse. Die Verstärkungslagen 11 sind nur lokal, also um das Innere 10 des Körpers unzusammenhängend verteilt, aber über 360 Grad um die Rotationsachse des Körpers 4 umlaufend, angeordnet.

Wie in Fig. 2 angedeutet, sind die Verstärkungsfasern 12 im Bereich III von Decklagenfasern / Decklagefäden 13, wie auch in Fig. 3 dargestellt, umflochten/eingebettet. Diese Verstärkungsfasern 12 sind also auch in Decklage 8 eingebettet bzw. die Verstärkungslage 11 ragt in diesem Bereich in die Decklage 8 hinein bzw. vice versa.

Es gibt aber auch im Bereich IV einen klar von der Decklage 8 getrennten Bereich der Verstärkungslage 11, in dem die Verstärkungsfasern 12 ondulationsfrei/nicht eingebettet/nichteingeflochten in die Decklage 8 sind, also von den Decklagenfasern 13 unumgriffen sind, auf diesen also, wie in Fig. 4 dargestellt, nur aufliegen/anliegen.

Im Bereich V ist die Kombination dieser beiden Ablagearten, wie in Fig. 5 dargestellt, realisiert.

Die Decklage 8 ist vorzugsweise eine Flechtlage, kann aber auch eine Wickellage sein. Die Verstärkungslage 11 wird beispielsweise durch mehrere Rovingstränge, vorzugsweise zwei Einzelstränge aus Rovings, mit jeweils 50K-Fasern, in Bandform gebildet, kann aber auch als Gewebeband oder Halbzeug ausgebildet sein. Von Vorteil ist die Verwendung von Kohlefasern.

Ein Geflecht ist dabei wie in Figur 6 skizziert realisiert. Es gibt Minus- und Plus-Decklagenfasern 13, wobei die Verstärkungsfaser 12 in 0°-Richtung das Biaxialgeflecht aus Decklagenfasern 13 zu einem Triaxialgeflecht kombiniert.

In Figur 7 ist das Umflecheten / Umwickeln eines Kerns 14 zum Herstellen des Körpers 4 für die Fahrradfelge 1 angedeutet, wobei mehrere Decklagenfasern 13 und zwei Verstärkungsfasern 12 zugeführt werden. Eine erste Verstärkungsfaser 12 wird über eine erste Spule 15 und die zweite Verstärkungsfaser 12 über eine zweite Spule 16 zugeführt. Die von der ersten Spule 15 eingebrachten Verstärkungsfasern 12 sind unumflochten in den Decklagenfasern 13 einer Schicht der Decklage 8 angeordnet, wohingegen die Verstärkungsfaser 12, die von der zweiten Spule 16 zugeführt ist, von den Decklagenfasern 13 in einer Schicht der Decklage 8 durch die Decklagenfasern 13 dort eingeflochten ist.

### Bezugszeichenliste

- 1: Fahrradfelge
- 2: Loch
- 3: Nippelbett
- 4: Körper
- 5: Radiale Innenseite
- 6: Radiale Außenseite
- 7: Felgenhorn
- 8: Decklage
- 9: Zwischenlage
- 10: Inneres des Körpers
- 11: Verstärkungslage
- 12: Verstärkungsfaser / Verstärkungsfaden
- 13: Decklagenfaser / Decklagenfaden
- 14: Kern
- 15: Erste Spule
- 16: Zweite Spule

## Patentansprüche

1. Fahrradfelge (1) für ein Laufrad eines Fahrrades, mit einem ringförmigen Körper (4), wobei der Körper (4) aus Faserverbundmaterial aufgebaut ist, wobei der Körper (4) aus unterschiedlichen Lagen (8, 9) an Fasern aufgebaut ist, wobei eine Lage (8) an Fasern als eine über die gesamte Oberfläche des Körpers (4) geschlossene Decklage (8) ausgebildet ist, wobei an wenigstens einer ausgewählten, begrenzten Stelle der Decklage (8), aber über den gesamten Umfang des ringförmigen Körpers (4) umlaufend und im Inneren des Körpers (4), von der Decklage (8) bedeckt, eine in Umfangsrichtung ausgerichtete Fasern besitzende Verstärkungslage (11) angeordnet ist und die Verstärkungslage (11) aus in Harz eingebetteten Verstärkungsfäden (12) aufgebaut ist, die parallel zueinander verlaufen, **dadurch gekennzeichnet, dass** die Verstärkungsfäden (12) derart in die Decklage (8) eingearbeitet sind, dass die Verstärkungsfäden (12) in einem Bereich von Decklagenfäden (13) der Decklage (8) umflochten sind.

2. Fahrradfelge (1) nach Anspruch 1, **dadurch gekennzeichnet, dass** die ausgewählte Stelle ein radialinnerer Bereich des Körpers (4) ist, der zum Ausbilden eines Nippelbetts (3) vorgesehen ist.

3. Fahrradfelge (1) nach Anspruch 1 oder 2, **dadurch gekennzeichnet, dass** die ausgewählte Stelle ein radial aussenliegender Felgenhornbereich (7) ist, oder dass die ausgewählte Stelle als zwei radial außen liegende und axial voneinander beabstandete Felgenhornbereiche (7) ausgebildet ist, wobei der Felgenhornbereich (7) oder die Felgenhornbereiche (7) zum Befestigen eines Mantels oder eines Schlauchreifens ausgelegt ist/sind.

4. Fahrradfelge (1) nach Anspruch 1 oder 3, **dadurch gekennzeichnet, dass** die Decklage (8) aus in Harz eingebetteten Decklagenfasern/Decklagenfäden (13) aufgebaut ist, die sich kreuzen.

5. Fahrradfelge (1) nach Anspruch 4, **dadurch gekennzeichnet, dass** die Decklagenfäden (13) miteinander verflochten sind oder nach Art einer Wickelablage aneinander anliegen.

6. Fahrradfelge (1) nach einem der Ansprüche 1 bis 5, **dadurch gekennzeichnet, dass** die Verstärkungsfäden (12) von einem oder mehreren Einzelsträngen mit einer Vielzahl an Fasern gestellt sind.

7. Fahrradfelge (1) nach einem der Ansprüche 1 bis 6, **dadurch gekennzeichnet, dass** die Fasern der Decklage (8) und der Verstärkungslage (11) gleichartig sind und der Gruppe von Kohlefasern, Aramidfasern und/oder Basaltfasern entstammen.

8. Fahrradfelge (1) nach einem der Ansprüche 4 bis 7, **dadurch gekennzeichnet, dass** weitere Verstärkungsfäden (12) so angeordnet sind, dass sie in radialer Richtung des Körpers (4) gesehen die Fasern der Decklage (8) triaxial ergänzen oder auf den Decklagenfäden (13) nur aufliegen, also unumflochten/ondulationsfrei abgelegt sind.

9. Fahrradfelge (1) nach einem der Ansprüche 1 bis 8, **dadurch gekennzeichnet, dass** die Verstärkungsfäden (12) die Decklage (8) bedeckend auf der radialen Außen- oder Innenseite des Körpers (4) und im Inneren der Decklage (8) abgelegt sind.

10. Fahrrad mit zumindest einem Laufrad, in dem eine Fahrradfelge (1) nach zumindest einem der Ansprüche 1 bis 9 eingesetzt ist.

## Claims

1. Bicycle rim (1) for a wheel of a bicycle having an annular body (4), wherein the body (4) is constructed of fibre composite material, wherein the body (4) is constructed of different layers (8, 9) of fibres, wherein one layer (8) of fibres is formed as a cover layer (8) closed across the entire surface of the body (4), wherein at at least one selected, limited position of the cover layer (8), but circumferential across the entire circumference of the annular body (4) and in the interior of the body (4), covered by the cover layer (8), is arranged a reinforcing layer (11) possessing fibres oriented in circumferential direction and the reinforcing layer (11) is constructed of reinforcing threads (12) embedded in resin, which extend parallel to one another, **characterised in that** the reinforcing threads (12) are incorporated into the cover layer (8) such that the reinforcing threads (12) in one region are woven into cover layer threads (13) of the cover layer (8).

2. Bicycle rim (1) according to claim 1, **characterised in that** the selected position is a radially internal region of the body (4) which is provided to form a nipple bed (3).

3. Bicycle rim (1) according to claim 1 or 2, **characterised in that** the selected position is a radially outlying rim flange area (7), or that the selected position is formed as two rim flange areas (7) which are radially outlying and axially spaced from one another, wherein the rim flange area (7) or the rim flange areas (7) is/are configured for fastening a jacket or a tubular tyre.

4. Bicycle rim (1) according to claim 1 or 3, **characterised in that** the cover layer (8) is constructed of cover layer fibres/cover layer threads (13) embedded in resin, which intersect.

5. Bicycle rim (1) according to claim 4, **characterised in that** the cover layer threads (13) are braided with one another or abut on one another in the manner of a winding depository.

6. Bicycle rim (1) according to one of claims 1 to 5, **characterised in that** the reinforcing threads (12) are provided by one or several individual strands having a multiplicity of fibres.

7. Bicycle rim (1) according to any of claims 1 to 6, **characterised in that** the fibres are of the same sort as the cover layer (8) and the reinforcing layer (11) and come from the group of carbon fibres, aramid fibres and/or basalt fibres.

8. Bicycle rim (1) according to any of claims 4 to 7, **characterised in that** further reinforcing threads (12) are arranged such that, viewed in radial direction of the body (4), they complement the fibres of the cover layer (8) triaxially or only lie upon the cover layer threads (13), that is, are deposited in such a way as not to be braided or as to be wavefree.

9. Bicycle rim (1) according to any of claims 1 to 8, **characterised in that** the reinforcing threads (12) covering the cover layer (8) are deposited on the radial outer side or inner side of the body (4) and in the interior of the cover layer (8).

10. Bicycle having at least one wheel in which is used a bicycle rim (1) according to at least one of claims 1 to 9.

## Revendications

1. Jante de bicyclette (1) pour une roue d'une bicyclette, avec un corps annulaire (4), dans laquelle le corps (4) est constitué de matériau composite fibreux, dans laquelle le corps (4) est constitué de différentes couches (8, 9) de fibres, dans laquelle une couche (8) de fibres est réalisée en tant que couche de recouvrement (8) fermée sur toute la surface du corps (4), dans laquelle une couche de renforcement (11) disposant de fibres orientées dans la direction circonférentielle est agencée à au moins un endroit sélectionné, délimité de la couche de recouvrement (8), mais entourant toute la circonférence du corps annulaire (4) et recouverte à l'intérieur du corps (4) par la couche de recouvrement (8), et la couche de renforcement (11) est constituée de fils de renforcement (12) noyés dans la résine, qui s'étendent parallèlement l'un à l'autre, **caractérisée en ce que** les fils de renforcement (12) sont intégrés dans la couche de recouvrement (8) de sorte que les fils de renforcement (12) sont entourés tressés dans une zone par des fils de couche de recouvrement (13) de la couche de recouvrement (8).

2. Jante de bicyclette (1) selon la revendication 1, **caractérisée en ce que** l'endroit sélectionné est une zone radialement intérieure du corps (4), qui est prévue pour la réalisation d'un lit de raccords (3).

3. Jante de bicyclette (1) selon la revendication 1 ou 2, **caractérisée en ce que** l'endroit sélectionné est une zone de rebord de jante (7) radialement extérieure, ou que l'endroit sélectionné est réalisé en tant que deux zones de rebord de jante (7) radialement extérieures et espacées l'une de l'autre, dans laquelle la zone de rebord de jante (7) ou les zones de rebord de jante (7) est/sont conçues pour la fixation d'une enveloppe ou d'un boyau.

4. Jante de bicyclette (1) selon la revendication 1 ou 3, **caractérisée en ce que** la couche de recouvrement (8) est constituée de fibres de couche de recouvrement/fils de couche de recouvrement (13) intégrés dans la résine, qui se croisent.

5. Jante de bicyclette (1) selon la revendication 4, **caractérisée en ce que** les fils de couche de recouvrement (13) sont entrelacés les uns avec les autres ou s'appuient les uns contre les autres à la manière d'un support d'enroulement.

6. Jante de bicyclette (1) selon l'une quelconque des revendications 1 à 5, **caractérisée en ce que** les fils de renforcement (12) sont formés d'un ou plusieurs brins individuels avec une pluralité de fibres.

7. Jante de bicyclette (1) selon l'une quelconque des revendications 1 à 6, **caractérisée en ce que** les fibres de la couche de recouvrement (8) et de la couche de renforcement (11) sont similaires et proviennent du groupe de fibres de carbone, fibres d'aramide et/ou fibres de basalte.

8. Jante de bicyclette (1) selon l'une quelconque des revendications 4 à 7, **caractérisée en ce que** d'autres fils de renforcement (12) sont agencés de sorte qu'ils complètent vu dans la direction radiale du corps (4), les fibres de la couche de recouvrement (8) de manière triaxiale ou reposent seulement, donc sont déposés non tressés/sans ondulation sur les fils de couche de recouvrement (13).

9. Jante de bicyclette (1) selon l'une quelconque des revendications 1 à 8, **caractérisée en ce que** les fils de renforcement (12) sont déposés en recouvrant la couche de recouvrement (8) sur le côté extérieur ou intérieur radial du corps (4) et à l'intérieur de la couche de recouvrement (8).

10. Bicyclette avec au moins une roue, dans laquelle une jante de bicyclette (1) selon au moins l'une quelconque des revendications 1 à 9 est utilisée.
